Europäisches Patentamt

European Patent Office

Office européen des brevets

(11) Numéro de publication:

**0 392 946**

**A1**

## (12) DEMANDE DE BREVET EUROPEEN

(21) Numéro de dépôt: 90420183.7

(22) Date de dépôt: 11.04.90

(51) Int. Cl.⁵: **F16C 32/06**

(30) Priorité: **12.04.89 FR 8905081**

(43) Date de publication de la demande:
**17.10.90 Bulletin 90/42**

(84) Etats contractants désignés:
**AT BE CH DE DK ES FR GB GR IT LI LU NL SE**

(71) Demandeur: **NEYRPIC**
**75 rue du Général Mangin**
**F-38100 Grenoble(FR)**

(72) Inventeur: **Dautremay, Gérard**
**53 galerie des Baladins**
**F-38100 Grenoble(FR)**

(74) Mandataire: **Karmin, Roger et al**
**Cabinet MONNIER 150, cours Lafayette BP**
**3058**
**F-69393 Lyon Cédex 03(FR)**

(54) **Dispositif d'équilibrage de la charge d'une butée hydrostatique.**

(57) Le dispositif d'équilibrage de la charge d'une butée hydrostatique comprend :
- un distributeur hydraulique (5) composé d'un corps (5a) et d'un tiroir (6) coulissant dans ledit alésage, ce tiroir comportant deux têtes (6a, 6b) disposées en tandem qui s'engagent dans la partie à grand diamètre (5b) de l'alésage étagé et qui sont solidaires d'une queue (6d) enfilée dans la partie à petit diamètre (5c) dudit alésage étagé ;
- un tuyau (10) réunissant la poche (1c) ménagée entre les deux éléments (1a, 1b) d'un patin (1) et une source de fluide sous pression via une gorge (5d) creusée dans l'alésage à grand diamètre (5b) de l'alésage du distributeur ;
- une canalisation de pilotage de commande (13) réunissant un point (14) du tuyau (10) et l'espace (20) du distributeur (5) situé au-delà de la tête (6b) du tiroir (6) ;
- une canalisation de pilotage de contre-réaction (17) réunissant l'espace (21) de l'alésage (5c) du distributeur (5) situé au-delà de l'extrémité de la queue (6d) à un autre point (18) du tuyau (10) situé près du distributeur (5) ;
- et un raccord à orifice laminaire réglable inséré dans le tuyau (14) entre les points (14) et (18).

On sait qu'un grand nombre de machines telles que les compresseurs, les turbines à gaz, à vapeur ou hydraulique, les antennes paraboliques à grand diamètre, les télescopes, etc... présentent un organe qui tourne par rapport à un organe fixe et doivent donc comporter entre elles-mêmes et ce dernier un dispositif de butée hydrostatique. Un tel dispositif comprend plusieurs patins comportant chacun une poche alimentée en fluide sous pression. D'une façon générale, l'épaisseur du film d'huile qui s'établit entre les surfaces des éléments des patins varie avec la charge appliquée par ce dernier et avec la température, de telle sorte que les deux organes des machines considérées présentent un positionnement qui n'est pas constant.

Les perfectionnements qui font l'objet de la présente invention visent à remédier à cet inconvénient et à permettre la réalisation d'un dispositif d'équilibrage de la charge encaissée par les différents patins d'une butée hydrostatique.

Le dispositif suivant l'invention comprend :
- un distributeur hydraulique composé d'un corps et d'un tiroir coulissant dans ledit alésage, ce tiroir comportant deux têtes disposées en tandem qui s'engagent dans la partie à grand diamètre de l'alésage étagé et qui sont solidaires d'une queue enfilée dans la partie à petit diamètre dudit alésage étagé ;
- un tuyau réunissant la poche ménagée entre les deux éléments d'un patin et une source de fluide sous pression via une gorge creusée dans l'alésage à grand diamètre de l'alésage du distributeur ;
- une canalisation de pilotage de commande réunissant un point du tuyau et l'espace du distributeur situé au-delà de la tête la plus extérieure du tiroir ;
- une canalisation de pilotage de contre-réaction réunissant l'espace de l'alésage du distributeur situé au-delà de l'extrémité de la queue à un autre point du tuyau situé près du distributeur ;
- et un raccord à orifice laminaire réglable inséré dans le tuyau entre les points de raccordement des deux canalisations de pilo tage.

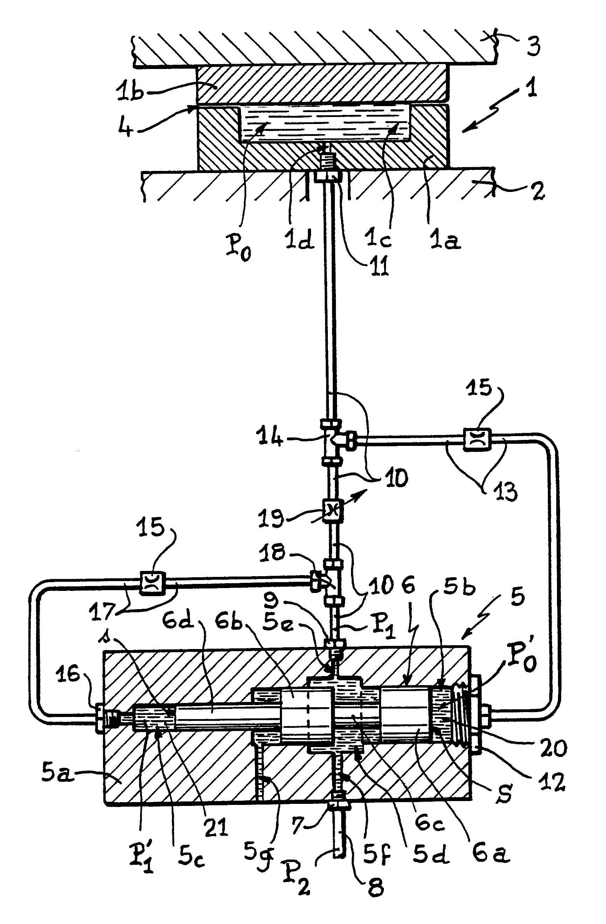

Le dessin annexé, donné à titre d'exemple, permettra de mieux comprendre l'invention, les caractéristiques qu'elle présente et les avantages qu'elle est susceptible de procurer :

La figure unique du dessin illustre le dispositif d'équilibrage suivant l'invention associé à l'un des patins d'une butée hydrostatique.

On a représenté l'un des patins 1 d'une butée hydrostatique placée entre un organe fixe 2 et un organe tournant 3. Le patin 1 est réalisé en deux pièces, l'une fixe 1a associée à l'organe 2 et l'autre 1b solidaire de l'organe 3. Dans la pièce 1a est creusée une poche 1c convenablement alimentée en un fluide sous pression tel que de l'huile, de telle sorte qu'entre les faces en vis-à-vis des pièces 1a et 1b s'établit un film d'huile de quelques dizaines de microns d'épaisseur et que l'on a référencé 4.

L'alimentation en fluide sous pression provient d'un distributeur 5 dont le corps 5a est creusé d'un alésage à deux diamètres 5b, 5c. Dans cet alésage peut coulisser un tiroir 6 comportant deux têtes en tandem 6a, 6b réunies par un tourillon 6c, la tête interne 6b étant associée à une queue 6d engagée dans la partie à faible diamètre 5c de l'alésage du corps 5a du distributeur 5.

Dans la partie à grand diamètre 5b de l'alésage du distributeur, l'on a ménagé une gorge 5d à partir de laquelle partent deux conduites 5e, 5f aboutissant à l'extérieur du distributeur. Le débouché du conduit 5f reçoit un raccord 7 auquel est associée l'extrémité d'un tuyau 8 provenant d'une source de fluide sous pression à la pression $P_2$. Le débouché du conduit 5e reçoit un raccord 9 fixé à l'une des extrémités d'un tuyau 10 dont l'autre extrémité est branchée à un raccord 11 monté au débouché d'un canal 1d de la pièce 1a du patin 1 aboutissant dans la poche 1c. Ainsi, le fluide provenant du tuyau 8 arrive dans la poche 1c par un circuit de puissance 8-5-10.

La partie à grand diamètre 5b du distributeur 5 est fermée par un raccord 12 auquel est branchée une canalisation de pilotage de commande 13 aboutissant à un raccord en té 14 inséré en un point du tuyau 10. Dans cette canalisation est inséré un raccord 15 à passage réduit.

La partie à faible diamètre 5c de l'alésage du distributeur 5 comporte un raccord 16 associé à l'une des extrémités d'une canalisation de pilotage de contre-réaction 17 dont l'extrémité opposée aboutit à un raccord en té 18 inséré en un point du tuyau 10 voisin du distributeur 5. Entre les raccords en té 18 et 14, un raccord 19 à orifice laminaire réglable est inséré dans le tuyau 10, c'est-à-dire en amont du branchement de la canalisation 13. Un autre raccord à passage réduit 15 est inséré dans la canalisation 17. On observe enfin la présence d'un trou 5g de vidange des fuites internes qui relie la jonction des deux alésages 5b, 5c et l'extérieur du distributeur 5.

On notera que la largeur de la gorge 5d est telle que si la tête 6a la plus extérieure du tiroir 6 bute contre le raccord 12, la tête 6b se trouve encore dans cette gorge.

Le fonctionnement est le suivant :

A l'équilibre, la pression $P_0$ du fluide dans la poche 1c du patin 1 permet la création du film d'huile 4. Cette pression est inférieure à celle $P_2$ du fait des pertes de charges créées dans le distributeur et dans le raccord 19. Bien entendu, la tête 6b du tiroir 6 n'empêche en aucune façon le passage du fluide dans la gorge 5d.

Si la pression $P_0$ augmente par suite d'une surcharge pour atteindre une pression $P'_0$, cette pression se transmet par la canalisation de pilotage 13 dans l'espace 20 situé entre la tête 6a la plus extérieure du tiroir 6 et le raccord 12, du fait qu'un débit s'établit dans la canalisation 13. L'épaisseur du film 4 diminue. L'application de la pression $P'_0$ dans l'espace 20 entraîne un déplacement du tiroir 6 vers la gauche, de telle sorte que la tête 6b découvre une section supplémentaire de la gorge 5d. Le débit dans le tuyau 10 augmente en conséquence pour provoquer une augmentation de l'épaisseur du film d'huile 4. Bien entendu, la pression $P_1$ régnant à l'origine du tuyau 10, c'est-à-dire au niveau du raccord 9, devient supérieure à celle qui y régnait auparavant, si bien qu'un débit s'établit dans la canalisation de pilotage de contre-réaction 17, de sorte que la pression $P'_1$ régnant dans l'espace 21 situé entre le bout de la queue 6d et le raccord 16 augmente et provoque un déplacement du tiroir 6 vers la droite jusqu'à une position d'équilibre différente de celle originelle après que le film 4 ait repris l'épaisseur qu'il avait auparavant. Cette épaisseur ne dépend que du rapport $\frac{P_0}{PT}$, de telle sorte qu'elle est indépendante de la charge et de la température.

La modification de la dimension de l'orifice laminaire du raccord 19 permet d'ajuster l'épaisseur du film d'huile 4 à la valeur souhaitée.

On ainsi réalisé un dispositif d'équilibrage qui permet de maintenir constant le rapport $\overline{p} = \frac{P_0}{PT}$, ce rapport étant toujours inférieur à 1. Il va de soi que dans ces conditions la section s de la partie à petit diamètre 5c de l'alésage du distributeur 5a et la section S du grand diamètre 5b de cet alésage sont dans un rapport égal à $\overline{p}$.

On observe qu'à l'équilibre $P'_1 = P_1$ et que $P'_0 = P_0$ car il n'y a aucun débit dans les canalisations de pilotage 13 et 17 donc

$$\overline{p} = \frac{P_0}{PT} = \frac{p'_0}{p'_1} = \frac{s}{S}$$

## Revendications

1. Dispositif d'équilibrage de la charge d'une butée hydrostatique, caractérisé en ce qu'il comprend :
- un distributeur hydraulique (5) composé d'un corps (5a) et d'un tiroir (6) coulissant dans ledit alésage, ce tiroir comportant deux têtes (6a, 6b) disposées en tandem qui s'engagent dans la partie à grand diamètre (5b) de l'alésage étagé et qui sont solidaires d'une queue (6d) enfilée dans la partie à petit diamètre (5c) dudit alésage étagé ;
- un tuyau (10) réunissant la poche (1c) ménagée entre les deux éléments (1a, 1b) d'un patin (1) et une source de fluide sous pression via une gorge (5d) creusée dans l'alésage à grand diamètre (5b)

de l'alésage du distributeur ;
- une canalisation de pilotage de commande (13) réunissant un point (14) du tuyau (10) et l'espace (20) du distributeur (5) situé au-delà de la tête (6b) du tiroir (6) ;
- une canalisation de pilotage de contre-réaction (17) réunissant l'espace (21) de l'alésage (5c) du distributeur (5) situé au-delà de l'extrémité de la queue (6d) à un autre point (18) du tuyau (10) situé près du distributeur (5) ;
- et un raccord à orifice laminaire réglable inséré dans le tuyau (14) entre les points (14) et (18).

2. Dispositif suivant la revendication 1, caractérisé en ce qu'un raccord à passage réduit (15) est inséré dans les canalisations de pilotage (13, 17).

3. Dispositif suivant la revendication 1, caractérisé en ce que la pression ($P_2$) régnant dans le tuyau d'amenée de fluide (8) est supérieure à celle ($P_1$) régnant dans le tuyau d'alimentation (10) à la sortie du distributeur (5) qui est elle-même inférieure à la pression ($P_0$) régnant dans la poche (1c).

4. Dispositif suivant la revendication 3, caractérisé en ce qu'un raccord à orifice laminaire (19) est inséré dans le tuyau d'alimentation (10) en amont du branchement de la canalisation de pilotage (13).

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 062 593 (ROYLE)<br>* Colonne 2, ligne 56 - colonne 3, ligne 53; figure 3 *<br>--- | 1 | F 16 C 32/06 |
| A | ENGINEERS DIGEST, vol. 30, no. 4, avril 1969, pages 49-53,55,57, Londres, GB; J.P. O'DONOGHUE et al.: "Compensation methods for externally pressurized bearings"<br>* Page 53, colonne de gauche: "Royle valve" *<br>----- | 1 | |

**DOMAINES TECHNIQUES RECHERCHES (Int. Cl.5)**

F 16 C

Le présent rapport a été établi pour toutes les revendications

| Lieu de la recherche | Date d'achèvement de la recherche | Examinateur |
|---|---|---|
| LA HAYE | 20-07-1990 | BARON C. |